# FASCICULE DE BREVET EUROPEEN

(11) **EP 2 643 186 B1**
(45) Date de publication et mention de la délivrance du brevet: **12.08.2015**
(21) Numéro de dépôt: 11794833.1
(22) Date de dépôt: 18.11.2011
(51) Int. Cl.: B60N 2/42, B60N 2/015

(54) **DISPOSITIF DE FIXATION À PAROI DE RETENUE TRANSVERSALE, POUR UN FIL DE GÂCHE D'UNE ASSISE DE SIÈGE DE VÉHICULE**
BEFESTIGUNGSVORRICHTUNG MIT EINER STÜTZQUERWAND FÜR EINEN VERRIEGELUNGSDRAHT EINES SITZTEILS EINES FAHRZEUGSITZES
FASTENING DEVICE HAVING A TRANSVERSE RETAINING WALL, FOR A LATCH WIRE OF A SEAT PORTION OF A VEHICLE SEAT

(30) Priorité: 25.11.2010 FR 1059726
(43) Date de publication de la demande: 02.10.2013
(73) Titulaire: PEUGEOT CITROËN AUTOMOBILES SA, 78140 Vélizy-Villacoublay (FR)
(72) Inventeur: DAVID, Eric, F-92290 Châtenay Malabry (FR)
(74) Mandataire: Jeannin, Laurent Jean-Pierre
(86) Numéro de dépôt international: PCT/FR2011/052694
(87) Numéro de publication internationale: WO 2012/069742

(56) Documents cités:
- WO-A2-01/38671
- FR-A1- 2 872 746
- FR-A1- 2 906 766

## Description

L'invention concerne certaines assises de siège de véhicule, éventuellement de type automobile, et plus précisément la fixation de telles assises.

On entend ici par "assise" toute partie d'un siège destinée à être fixée directement (et non indirectement via des piètements) sur une partie surélevée d'un plancher d'un véhicule, et destiné à recevoir (ou accueillir) en position assise un ou plusieurs passagers.

Comme le sait l'homme de l'art, certaines assises de siège de véhicule comprennent sur une partie avant de leur face inférieure au moins un fil de gâche (et plus généralement deux) qui est destiné à être immobilisé par un dispositif de fixation solidarisé à une partie surélevée du plancher du véhicule. Ce dispositif de fixation comprend un boîtier logeant une patte de blocage qui est montée à rotation (sur une face interne d'une paroi) et destinée à bloquer le fil de gâche lorsqu'il est placé dans un logement dédié du boîtier, afin de l'empêcher de se déplacer verticalement.

Afin qu'un siège puisse être homologué, il faut notamment que son assise satisfasse à des tests définis par des règlements (généralement internationaux). L'un de ses tests réglementaires (actuellement référencé ECE 17 20g AR en France) impose que l'assise demeure fixée sur son plancher d'accueil (via ses dispositifs de fixation) lorsqu'elle est subitement et violemment projetée vers l'arrière après avoir été lestée intérieurement d'une charge égale à vingt fois sa masse. Or, pendant un tel test le fil de gâche d'une assise subit une force qui l'entraîne vers l'arrière et donc vient le plaquer contre la patte de blocage du dispositif de fixation. Cette patte de blocage étant montée à rotation, elle est repoussée vers l'arrière par le fil de gâche, ce qui libère devant elle un espace dont profite le fil de gâche pour s'échapper du dispositif de fixation, ce qui provoque la désolidarisation de la partie avant de l'assise du plancher. Par conséquent, le siège comportant cette assise ne peut pas être homologué en raison de l'interaction néfaste entre les fils de gâche de son assise et les pattes de blocage des dispositifs de fixation associés.

« Le document FR2906766 décrit un montage d'un siège sur la structure de sol d'un véhicule automobile avec lequel le siège est associé à la structure en ses parties inférieures avant et arrière.

Le document WO200138671 décrit un ensemble verrou à encliquetage qui comporte une poignée, un boîtier, un crochet monté rotatif sur le boîtier, et une serrure demi-tour engendrant sa propre force de ressort interne pour assurer la transmission d'une force entre la poignée de l'ensemble et la serrure demi-tour, ce qui a pour effet de libérer le crochet du loquet.

Le document FR2872746 décrit un dispositif pour fixer l'assise d'une banquette ou d'un siège d'un véhicule automobile de manière amovible sur un plancher du véhicule. »

L'invention a pour but de remédier à l'inconvénient précité en empêchant l'interaction néfaste présentée ci-avant.

L'invention propose notamment à cet effet un dispositif, dédié à la fixation d'un fil de gâche d'une assise de siège de véhicule sur un plancher de ce dernier, et comprenant un boîtier qui, d'une part, est propre à être solidarisé au plancher et loge une patte de blocage montée à rotation et destinée à bloquer le fil de gâche pour l'empêcher de se déplacer verticalement, et, d'autre part, comprend, derrière sa patte de blocage, une paroi de retenue adaptée au passage de cette dernière et définissant une butée transversale propre à bloquer un déplacement longitudinal vers l'arrière du véhicule d'au moins une partie sensiblement verticale du fil de gâche lorsque ce dernier subit une force qui l'entraîne vers l'arrière du véhicule.

Le dispositif selon l'invention peut comporter d'autres caractéristiques qui peuvent être prises séparément ou en combinaison, et notamment :
- la paroi de retenue peut définir une butée transversale propre à bloquer un déplacement longitudinal vers l'arrière du véhicule de deux parties sensiblement verticales du fil de gâche;
- la paroi de retenue peut être sensiblement verticale;
- la paroi de retenue peut faire partie d'une pièce rapportée qui est solidarisée au boîtier;
   ➢ la pièce rapportée peut être solidarisée par clippage à des moyens de clippage qui sont logés dans le boîtier;
      - les moyens de clippage peuvent être agencés sous la forme d'une patte flexible qui est solidarisée à rotation à une paroi du boîtier;
      - la pièce rapportée peut comprendre deux parois latérales qui sont solidarisées sensiblement perpendiculairement à la paroi de retenue et une paroi de fixation qui est solidarisée sensiblement perpendiculairement à la paroi de retenue et aux parois latérales et qui comprend une ouverture adaptée au passage des moyens de clippage.

L'invention propose également un véhicule, éventuellement de type automobile, et comprenant un plancher comportant une partie surélevée sur laquelle est solidarisé au moins un dispositif de fixation du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue de côté, une partie surélevée d'un plancher de véhicule automobile sur laquelle est installé un siège via des dispositifs de fixation selon l'invention,
- la figure 2 illustre schématiquement, dans une vue du dessus, un exemple de réalisation de dispositif de fixation selon l'invention avant qu'il ne serve à immobiliser un fil de gâche d'une assise de siège,
- la figure 3 illustre schématiquement, dans une vue en perspective de trois-quarts avant, le dispositif de fixation de la figure 2, sans moyens de clippage, mais solidarisé à une partie surélevée d'un plancher et immobilisant un fil de gâche (partiellement représenté) d'une assise de siège, et
- la figure 4 illustre schématiquement, dans une vue en perspective du côté avant, le dispositif de fixation de la figure 2 solidarisé à une partie surélevée d'un plancher et immobilisant un fil de gâche d'une assise de siège.

Les dessins annexés pourront non seulement servir à compléter l'invention, mais aussi contribuer à sa définition, le cas échéant.

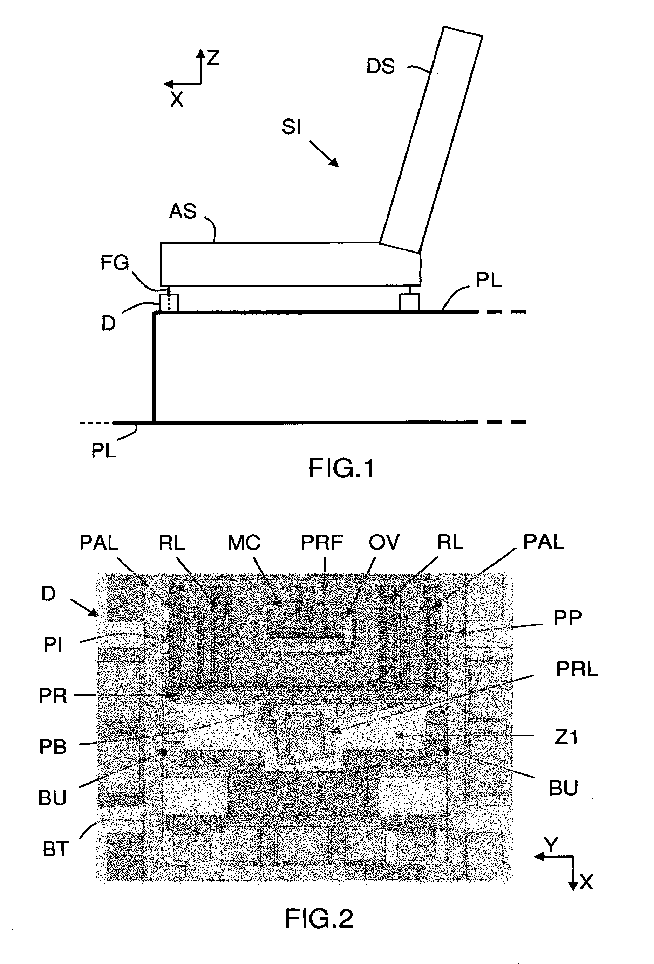

On a schématiquement représenté sur la figure 1 un plancher PL de véhicule comportant une partie surélevée sur laquelle est installé un siège SI, via des dispositifs de fixation D selon l'invention.

Dans ce qui suit, on considère, à titre d'exemple non limitatif, que le véhicule est de type automobile. Il s'agit par exemple d'une voiture. Mais, l'invention n'est pas limitée à ce type de véhicule. Elle concerne en effet tout véhicule comportant un plancher ayant une partie surélevée sur laquelle peut être installé au moins un siège (ou banquette). Par conséquent, le véhicule pourra être également de type terrestre ou maritime (ou fluvial) ou encore aérien.

A titre d'exemple non limitatif, la partie surélevée du plancher PL peut être dédiée au rang deux d'une voiture comportant au moins deux rangs de siège(s) dans lesquels le rang un est dédié aux sièges avant.

Sur les figures, la direction X est la direction longitudinale du véhicule, laquelle est sensiblement parallèle aux côtés latéraux comportant les portières latérales, la direction Y est la direction transversale du véhicule, laquelle est sensiblement perpendiculaire aux côtés latéraux comportant les portières latérales, et la direction Z est la direction verticale du véhicule, laquelle est sensiblement perpendiculaire au plancher PL. Par ailleurs, un côté droit, respectivement gauche, désigne un côté longitudinal d'un élément situé sur la droite, respectivement la gauche, de cet élément.

Comme illustré sur la figure 1, on entend ici par "siège" tout équipement comprenant au moins une assise AS associée à au moins un dossier DS, et destiné à recevoir (ou accueillir) en position assise au moins un passager. Par conséquent, il pourra s'agir d'un siège monoplace ou d'une banquette.

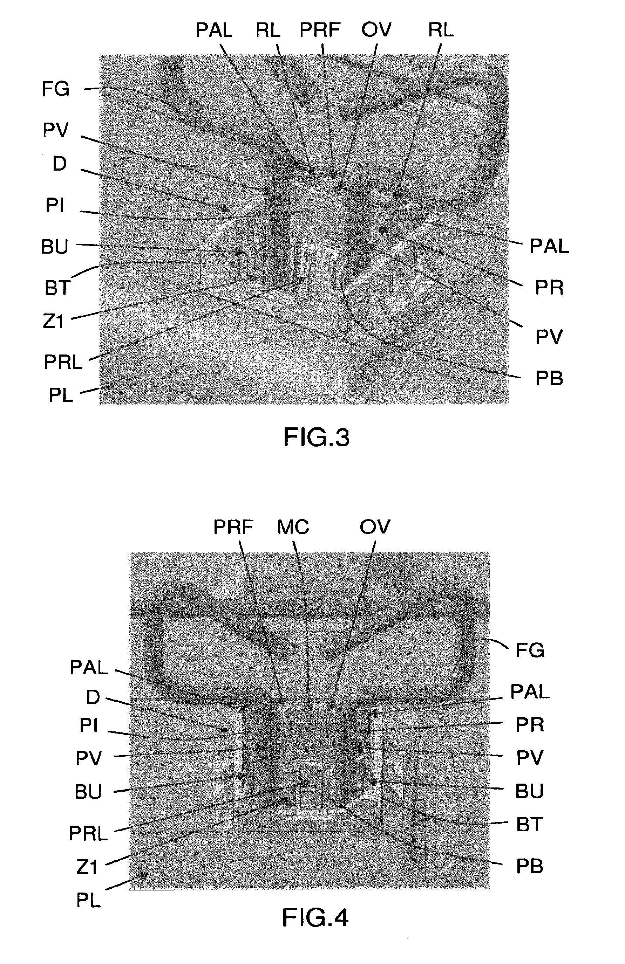

L'assise AS comprend sur une partie avant d'une face inférieure au moins un fil de gâche FG (illustré sur les figures 3 et 4) qui est destiné à être immobilisé par un dispositif de fixation D, selon l'invention, solidarisé fixement à la partie surélevée du plancher PL (et donc sans interposition de piètements).

On entend ici par "partie avant" une partie qui est orientée vers l'avant du véhicule, et par "partie arrière" une partie qui est orientée vers l'arrière de ce même véhicule.

Par ailleurs, on entend ici par "face inférieure" une face qui est orientée vers le plancher PL, et par "face supérieure" une face qui est orientée vers le plafond du véhicule et sur laquelle on peut s'asseoir.

De préférence, l'assise AS comprend sur la partie avant de sa face inférieure deux fils de gâche FG distants et destinés à être immobilisés respectivement par deux dispositifs de fixation D installés sur le plancher PL en deux endroits distants suivant la direction transversale Y mais situés sensiblement à un même niveau par rapport à la direction longitudinale X.

Un dispositif de fixation D, selon l'invention, comprend un boîtier BT qui est destiné à être solidarisé à la partie surélevée du plancher PL et qui loge, dans un espace interne, une patte de blocage PB montée à rotation et destinée à bloquer un fil de gâche FG d'une assise AS dans une zone choisie Z1 pour l'empêcher de se déplacer (ou bouger) verticalement.

La patte de blocage PB est montée à rotation afin de permettre le positionnement d'une partie inférieure du fil de gâche FG dans la zone choisie Z1 du boîtier BT. Plus précisément, lorsque le fil de gâche FG est introduit dans la zone choisie Z1, il repousse vers l'arrière du véhicule la patte de blocage PB, qui était jusqu'alors placée dans une position de repos, du fait qu'elle est montée à rotation. De préférence, ce montage à rotation se fait sous une force de rappel qui tend à ramener automatiquement la patte de blocage PB vers sa position de repos (illustrée sur la figure 2) lorsqu'elle a été écartée de cette dernière.

Par exemple, le boîtier BT comprend une paroi périphérique sensiblement verticale et définissant un cadre (éventuellement muni de renforts extérieurs et/ou intérieurs, comme illustré non limitativement sur les figures 2 à 4) qui délimite l'espace interne où se trouve notamment logée la patte de blocage PB. Dans ce cas, et comme illustré, la patte de blocage PB comprend une première extrémité qui peut être solidarisée à rotation à une face interne d'une partie de la paroi périphérique PP, et une seconde extrémité libre et opposée à la première. Comme illustré, cette seconde extrémité peut comprendre une protubérance longitudinale PRL qui s'étend vers l'avant. Cette patte de blocage PB fait, de préférence, partie intégrante du boîtier BT. Mais, il pourrait également s'agir d'une pièce rapportée.

On notera que le boîtier BT peut éventuellement comporter une paroi inférieure solidarisée sensiblement perpendiculairement à sa paroi périphérique PP et destinée à être placée sur le plancher PL.

On notera également que le boîtier BT peut être avantageusement réalisé par moulage dans un matériau plastique ou synthétique résistant.

Selon l'invention, le boîtier BT comprend, derrière sa patte de blocage PB (et donc derrière la zone choisie Z1), une paroi de retenue PR qui est adaptée au passage de la patte de blocage PB (c'est-à-dire qui permet son pivotement vers l'arrière du véhicule). Cette paroi de retenue PR définit une butée transversale propre à bloquer un déplacement longitudinal vers l'arrière du véhicule d'au moins une partie PV sensiblement verticale du fil de gâche FG lorsque ce dernier (FG) subit une force qui l'entraîne vers l'arrière du véhicule (par exemple lors d'un choc arrière).

Dans l'exemple non limitatif illustré, le fil de gâche FG présente dans sa partie inférieure une forme générale en U. Par conséquent, il comprend deux parties PV distantes l'une de l'autre, sensiblement verticales et reliées par une partie transversale, sensiblement horizontale. Cet agencement particulier est destiné à permettre le passage, à l'intérieur de la partie inférieure en forme de U du fil de gâche FG, d'une protubérance PRL qui se projette vers l'avant de la patte de blocage PB (suivant la direction longitudinale X) au niveau de sa seconde extrémité libre. On comprendra en effet que lorsque cette protubérance PRL est logée dans le U, le fil de gâche FG ne peut plus bouger suivant la direction verticale Z. Il se retrouve également notablement limité dans ses déplacements transversaux. La protubérance PRL sert donc à verrouiller le fil de gâche FG dans une position choisie par rapport au plancher PL.

On notera, comme illustré non limitativement sur les figures 2 à 4, que les déplacements transversaux peuvent être totalement empêchés par la présence de deux butées transverses BU définies de part et d'autre de la zone choisie Z1, sensiblement suivant un même niveau par rapport à la direction longitudinale X, sur la face interne de deux portions opposées de la paroi périphérique PP du boîtier BT.

On comprendra que, lorsque le fil de gâche FG subit une force qui l'entraîne vers l'arrière, il vient buter contre la paroi de retenue PR qui est fixe par rapport au plancher PL (et offre un contre appui) et donc sa course vers l'arrière se retrouve interrompue. Le fil de gâche FG ne peut donc repousser vers l'arrière que très légèrement (voire pas du tout) la patte de blocage PB, si bien que cette dernière continue à le maintenir immobilisé verticalement dans la zone choisie Z1 (qui n'est pas dégagée). La partie avant de l'assise AS ne peut donc pas être désolidarisée du plancher PL en cas de choc arrière induisant une force dont l'intensité est inférieure à un seuil pouvant être fixé par voie réglementaire.

Afin d'optimiser le blocage du fil de gâche FG, il est avantageux que la paroi de retenue PR soit sensiblement verticale et donc sensiblement parallèle aux parties verticales PV du fil de gâche FG.

On notera, comme illustré non limitativement, que la paroi de retenue PR peut faire partie d'une pièce rapportée PI qui est solidarisée au boîtier BT. Mais, cela n'est pas obligatoire. En effet, elle (PR) pourrait faire partie intégrante du boîtier BT (par exemple elle pourrait être définie sensiblement perpendiculairement à la paroi inférieure (ou de fond) du boîtier BT et suivant la direction transversale Y.

Cette pièce rapportée PI peut être, par exemple, solidarisée par clippage à des moyens de clippage MC qui sont logés dans le boîtier BT. Mais, d'autres types de solidarisation peuvent être envisagés, comme par exemple le collage, le soudage ou le vissage.

A titre d'exemple, et comme illustré non limitativement sur le figure 4, les moyens de clippage MC peuvent être agencés sous la forme d'une patte flexible qui est solidarisée à rotation, de préférence sous une force de rappel, à une face interne d'une paroi du boîtier BT. On notera que cette patte flexible peut soit faire partie intégrante du boîtier BT, soit être rapportée sur une paroi du boîtier BT.

Dans ce cas, la pièce rapportée PI peut, par exemple, comprendre deux parois latérales PAL, qui sont solidarisées sensiblement perpendiculairement à la paroi de retenue PR, et une paroi de fixation PRF, qui est solidarisée sensiblement perpendiculairement à la paroi de retenue PR et aux parois latérales PAL et qui comprend une ouverture OV (voir figure 3) adaptée au passage des moyens de clippage MC.

Les parois latérales PAL sont par exemple définies dans un plan constitué à partir des directions verticale Z et longitudinale X.

Pour solidariser la pièce rapportée PI au boîtier BT, on peut par exemple commencer par entraîner la patte flexible des moyens de clippage MC légèrement en rotation vers l'avant afin qu'une extrémité libre qu'elle comprend puisse passer au travers de l'ouverture OV de la paroi de fixation PRF. Puis, on peut poser la pièce rapportée PI sur le boîtier BT (éventuellement sur des nervures définies sur sa paroi inférieure), et relâcher la patte flexible afin que son extrémité libre vienne se placer au dessus de (et contre) la face supérieure de la paroi de fixation PRF afin de verrouiller la pièce rapportée PI dans sa position finale.

On notera, comme illustré, que la pièce rapportée PI peut, par exemple, comprendre une ou plusieurs parois de renfort PRF solidarisées sensiblement perpendiculairement à la paroi de retenue PR, entre les deux parois latérales PAL, et à la paroi de fixation PRF. Cet agencement est destiné à renforcer la tenue de la paroi de retenue PR lorsque les parties verticales PV du fil de gâche FG viennent se plaquer contre elle. Cela permet en particulier d'éviter qu'elle ne fléchisse.

On notera également que la pièce rapportée PI peut être réalisé par moulage dans un matériau plastique ou synthétique résistant, comme par exemple le polyoxyméthylène (ou POM).

On notera également que l'utilisation d'une pièce rapportée PI est particulièrement avantageuse car elle permet de réutiliser des boîtiers BT existants (de l'art antérieur) auxquels on adjoint d'éventuels moyens de clippage MC.

L'invention ne se limite pas aux modes de réalisation de dispositif de fixation et de véhicule décrits ci-avant, seulement à titre d'exemple, mais elle englobe toutes les variantes que pourra envisager l'homme de l'art dans le cadre des revendications ci-après.

## Revendications

1. Dispositif (D) pour la fixation d'un fil de gâche (FG) d'une assise (AS) de siège (SI) de véhicule sur un plancher (PL) de ce dernier, ledit dispositif (D) comprenant un boîtier (BT) propre à être solidarisé audit plancher (PL) et logeant une patte de blocage (PB) montée à rotation et destinée à bloquer ledit fil de gâche (FG) pour l'empêcher de se déplacer verticalement, **caractérisé en ce que** ledit boîtier (BT) comprend, derrière ladite patte de blocage (PB), une paroi de retenue (PR) adaptée au passage de cette dernière (PB) et définissant une butée transversale propre à bloquer un déplacement longitudinal vers l'arrière dudit véhicule d'au moins une partie (PV) sensiblement verticale dudit fil de gâche (FG) lorsque ce dernier (FG) subit une force qui l'entraîne vers l'arrière dudit véhicule.

2. Dispositif selon la revendication 1, **caractérisé en ce que** ladite paroi de retenue (PR) définit une butée transversale propre à bloquer un déplacement longitudinal vers l'arrière dudit véhicule de deux parties (PV) sensiblement verticales dudit fil de gâche (FG).

3. Dispositif selon l'une des revendications 1 et 2, **caractérisé en ce que** ladite paroi de retenue (PR) est sensiblement verticale.

4. Dispositif selon l'une des revendications 1 à 3, **caractérisé en ce que** ladite paroi de retenue (PR) fait partie d'une pièce rapportée (PI) solidarisée audit boîtier (BT).

5. Dispositif selon la revendication 4, **caractérisé en ce que** ladite pièce rapportée (PI) est solidarisée par clippage à des moyens de clippage (MC) logés dans ledit boîtier (BT).

6. Dispositif selon la revendication 5, **caractérisé en ce que** lesdits moyens de clippage (MC) sont agencés sous la forme d'une patte flexible solidarisée à rotation à une paroi dudit boîtier (BT).

7. Dispositif selon l'une des revendications 5 et 6, **caractérisé en ce que** ladite pièce rapportée (PI) comprend deux parois latérales (PAL) solidarisées sensiblement perpendiculairement à ladite paroi de retenue (PR) et une paroi de fixation (PRF) solidarisée sensiblement perpendiculairement à ladite paroi de retenue (PR) et auxdites parois latérales (PAL) et comprenant une ouverture (OV) adaptée au passage desdits moyens de clippage (MC).

8. Véhicule, **caractérisé en ce qu'**il comprend un plancher (PL) comportant une partie surélevée sur laquelle est solidarisé au moins un dispositif de fixation (D) selon l'une des revendications précédentes.

9. Véhicule selon la revendication 8, **caractérisé en ce qu'**il est de type automobile.

## Patentansprüche

1. Vorrichtung (D) zum Befestigen eines Türrastendrahts (FG) einer Sitzfläche (AS) eines Fahrzeugsitzes (SI) auf einem Fußboden (PL) dieses Letzteren, wobei die Vorrichtung (D) ein Gehäuse (BT) umfasst, das geeignet ist, fest mit dem Fußboden (PL) verbunden zu werden, und das eine Blockierungspratze (PB) aufnimmt, die drehend montiert und dazu bestimmt ist, den Türrastendraht (FG) zu blockieren, um ihn daran zu hindern, sich vertikal zu bewegen, **dadurch gekennzeichnet, dass** das Gehäuse (BT) hinter der Blockierungspratze (PB) eine Stützwand (PR) umfasst, die an das Durchgehen dieser Letzteren (PB) angepasst ist und einen Queranschlag definiert, der geeignet ist, eine Längsbewegung zur Rückseite des Fahrzeugs mindestens eines Teils (PV) des Türrastendrahts (FG), der im Wesentlichen vertikal ist, zu blockieren, wenn dieser Letztere (FG) einer Kraft ausgesetzt wird, die ihn zur Rückseite des Fahrzeugs zieht.

2. Vorrichtung nach Anspruch 1, **dadurch gekennzeichnet, dass** die Stützwand (PR) einen Queranschlag definiert, der geeignet ist, eine Längsbewegung zur Rückseite des Fahrzeugs von zwei Teilen (PV) des Türrastendrahts (FG), die im Wesentlichen vertikal sind, zu blockieren.

3. Vorrichtung nach einem der Ansprüche 1 und 2, **dadurch gekennzeichnet, dass** die Stützwand (PR) im Wesentlichen vertikal ist.

4. Vorrichtung nach einem der Ansprüche 1 bis 3, **dadurch gekennzeichnet, dass** die Stützwand (PR) Teil eines angebauten Teils (PI) ist, das fest mit dem Gehäuse (BT) verbunden ist.

5. Vorrichtung nach Anspruch 4, **dadurch gekennzeichnet, dass** das angebaute Teil (PI) durch Clipsen fest mit Clipsmitteln (MC), die in dem Gehäuse (BT) untergebracht sind, verbunden ist.

6. Vorrichtung nach Anspruch 5, **dadurch gekennzeichnet, dass** die Clipsmittel (MC) in Form einer biegsamen Pratze angeordnet sind, die in Drehung fest mit einer Wand des Gehäuses (BT) verbunden ist.

7. Vorrichtung nach einem der Ansprüche 5 und 6, **dadurch gekennzeichnet, dass** das angebaute Teil (PI) zwei Seitenwände (PAL) umfasst, die im Wesentlichen senkrecht fest mit der Stützwand (PR) verbunden sind, und eine Befestigungswand (PRF), die im Wesentlichen senkrecht zu der Stützwand (PR) und zu den Seitenwänden (PAL) fest verbunden ist und eine Öffnung (OV) umfasst, die für das Durchgehen der Clipsmittel (MC) angepasst ist.

8. Fahrzeug, **dadurch gekennzeichnet, dass** es einen Fußboden (PL) umfasst, der einen überhöhten Teil umfasst, auf dem mindestens eine Befestigungsvorrichtung (D) nach einem der vorhergehenden Ansprüche fest verbunden ist.

9. Fahrzeug nach Anspruch 8, **dadurch gekennzeichnet, dass** es des Typs Kraftfahrzeug ist.

## Claims

1. A device (D) for fastening a latch wire (FG) of a seat portion (AS) of a vehicle seat (SI) to a floor pan (PL) of the latter, said device (D) including a housing (BT) designed to be solidly connected to said floor pan (PL) and housing a locking lug (PB) that is rotatably mounted and intended to lock said latch wire (FG) in order to prevent the vertical movement thereof, **characterized in that** said housing (BT) includes, behind said locking lug (PB), a retaining wall (PR) suitable for the passage of the latter (PB) and defining a transverse abutment that can block a longitudinal movement toward the rear of said vehicle of at least a substantially vertical part (PV) of said latch wire (FG) when the latter (FG) is subjected to a force that drives it towards the rear of said vehicle.

2. The device according to Claim 1, **characterized in that** said retaining wall (PR) defines a transverse abutment that can block a longitudinal movement toward the rear of said vehicle of two substantially vertical parts (PV) of said latch wire (FG).

3. The device according to one of Claims 1 and 2, **characterized in that** said retaining wall (PR) is substantially vertical.

4. The device according to one of Claims 1 to 3, **characterized in that** said retaining wall (PR) forms part of an added-on piece (PI) solidly connected to said housing (BT).

5. The device according to Claim 4, **characterized in that** said added-on piece (PI) is solidly connected by clipping to clipping means (MC) housed in said housing (BT).

6. The device according to Claim 5, **characterized in that** said clipping means (MC) are arranged in the form of a flexible lug solidly connected with rotation to a wall of said housing (BT).

7. The device according to one of Claims 5 and 6, **characterized in that** said added-on piece (PI) includes two lateral walls (PAL) solidly connected substantially perpendicularly to said retaining wall (PR) and an attachment wall (PRF) solidly connected substantially perpendicularly to said retaining wall (PR) and to said lateral walls (PAL) and including an opening (OV) suitable for the passage of said clipping means (MC).

8. A vehicle, **characterized in that** it includes a floor pan (PL) comprising a raised part on which there is solidly connected at least one fastening device (D) according to one of the preceding claims.

9. The vehicle according to Claim 8, **characterized in that** it is of the automobile type.
